# EUROPÄISCHE PATENTSCHRIFT

(11) **EP 1 249 996 B1**
(45) Veröffentlichungstag und Bekanntmachung des Hinweises auf die Patenterteilung: **22.06.2005**
(21) Anmeldenummer: 01250134.2
(22) Anmeldetag: 12.04.2001
(51) Int. Cl.: H04M 17/00, G07F 7/10

(54) **Verfahren zum Abrechnen von Leistungen in einem Kommunikationsnetz**
Method for billing of services in a communication system
Procédé de facturation de services dans un réseau de communication

(43) Veröffentlichungstag der Anmeldung: 16.10.2002
(73) Patentinhaber: SIEMENS AKTIENGESELLSCHAFT, 80333 München (DE)
(72) Erfinder: Klatt, Uwe, 13507 Berlin (DE); Lilge, Manfred, 14195 Berlin (DE); Ryll, Thomas, 10823 Berlin (DE)

(56) Entgegenhaltungen:
- EP-A- 0 848 361
- WO-A-00/24161
- WO-A-00/70859
- US-A- 5 905 736

## Beschreibung

Die Erfindung betrifft ein Verfahren zum Abrechnen von kostenpflichtigen Leistungen mittels eines Guthaben-Kontos, das in einem Kommunikationsnetz durch eine Kontoführungseinrichtung für mindestens ein in dem Kommunikationsnetz registriertes Kommunikationsendgerät geführt wird.

Es ist allgemein bekannt, dass in Kommunikationsnetzen Gebühren für Kommunikationsleistungen von in diesen Kommunikationsnetzen geführten Guthabenkonten (sog. Prepaid-Konten) abgebucht werden. Dabei sind diese Guthabenkonten einem oder mehreren in dem Kommunikationsnetz registrierten Kommunikationsendgeräten (z. B. Festnetztelefonen, Handys, PDAs (Personal Digital Assistents), Notebooks, Rechnern) zugeordnet. Von einem solchen Kommunikationsendgerät aus können so lange Kommunikationsverbindungen aufgebaut und durchgeführt werden, wie auf dem zugeordneten Guthabenkonto ein Gebühren-Guthaben vorhanden ist. Ist das Gebührenguthaben aufgebraucht, dann können keine neuen Kommunikationsverbindungen mehr hergestellt werden bzw. bestehende Kommunikationsverbindungen werden unterbrochen.

Bei diesem bekannten Verfahren werden die Guthabenkonten in dem Kommunikationsnetz geführt, in welchem auch die Kommunikationsverbindungen hergestellt werden, also die Leistungen erbracht werden. Der Betreiber eines derartigen Kommunikationsnetzes hat Zugriff auf die in seinem Kommunikationsnetz geführten Guthabenkonten und kann entsprechend der in dem Kommunikationsnetz erbrachten Leistungen Guthabenbeträge von den Guthabenkonten abbuchen. Der Betreiber eines solchen Kommunikationsnetzes ist also sowohl für die Erbringung der Leistungen als auch für die Abrechnung der durch die Leistungen entstehenden Kosten zuständig.

In modernen Kommunikationsnetzen sind nun Mechanismen bekannt, mit denen auch von dem Kommunikationsnetz unabhängige Anbieter für die an dem Kommunikationsnetz angeschlossenen Kommunikationsendgeräte Leistungen erbringen können; das Kommunikationsnetz wird dabei gleichsam für die unabhängigen Anbieter "geöffnet". Unter unabhängigen Anbietern sollen hier solche verstanden werden, die nicht Betreiber des Kommunikationsnetzes sind. Derartige Mechanismen sind unter der Bezeichnung OSA (Open Service Architecture) bzw. Parlay bekannt. Solche unabhängige Anbieter werden auch als "Third Party Service Provider" bezeichnet. Leistungen solcher unabhängiger Anbieter wurden bisher über Konten abgerechnet, bei denen der Leistungsnutzer nach der Leistungserbringung die angefallenen Kosten bezahlt (sog. "Postpaid-Konten")

Aus der Patentschrift US 5,905,736 ist ein Verfahren zum Abrechnen von Transaktionen über das Internet bekannt, bei dem von einem Internet Service Provider eine IP-Adresse und die mit der Transaktion verbundenen Kosten zu einem Billing Server übermittelt wird. Der Billing Server ermittelt aus der IP-Adresse die Identität des Nutzers und belastet ein Konto dieses Nutzers.

Aus der internationalen Patentanmeldung WO 00/24161 A1 ist ein Abrechnungsverfahren in einem Telekommunikationsnetz bekannt, bei dem.eine Abrechnungseinheit außerhalb des genutzten Telekommunikationsnetzes angeordnet ist, beispielsweise in einer SIM-Karte oder hinter einer OSA-Architektur. Bei diesem Verfahren werden zu den genutzten Diensten gehörende Daten zu einer Mediator-Einheit übertragen und dort in Echtzeit in ein Datenformat der Abrechnungseinheit umgewandelt, so dass die Abrechnungseinheit nur ein Datenformat zu kennen braucht.

Der Erfindung liegt die Aufgabe zugrunde, ein Verfahren anzugeben, mit dem auch von einem unabhängigen Anbieter angebotene Leistungen unter Benutzung eines Guthabenkontos des Kommunikationsnetzes abgerechnet werden können, wenn die Zahlungsanforderungseinrichtung keine Informationen darüber besitzt, was für ein Konto dem jeweiligen Kommunikationsendgerät zugeordnet ist und von welcher Kontoführungseinrichtung dieses Konto geführt wird.

Diese Aufgabe wird gelöst durch ein Verfahren der oben angegebenen Art, bei dem
- von einer außerhalb der Kontrolle eines Betreibers des Kommunikationsnetzes liegenden Zahlungsanforderungseinrichtung eine Zahlungsanforderung an ein dem Kommunikationsnetz zugeordnetes Zahlungssystem gesendet wird, wobei die Zahlungsanforderung eine Kennung des Kommunikationsendgerätes und einen Zahlbetrag enthält,
- von dem Zahlungssystem unter Nutzung der Kennung Adressierungsdaten der Kontoführungseinrichtung des Guthaben-Kontos ermittelt werden, indem von dem Zahlungssystem eine Adreßbestimmungseinrichtung mit der Ermittlung der Adressierungsdaten der Kontoführungseinrichtung des Guthaben-Kontos beauftragt wird und von der Adreßbestimmungseinrichtung die Adressierungsdaten aus einem Datenspeicherknoten des Kommunikationsnetzes abgefragt werden, und
- von dem Zahlungssystem eine Verrechnungsnachricht an die durch die Adressierungsdaten gekennzeichnete Kontoführungseinrichtung einer Mehrzahl von Kontoführungseinrichtungen des Kommunikationsnetzes gesendet wird, um den Zahlbetrag von dem Guthaben-Konto abzubuchen.
Hierbei ist insbesondere vorteilhaft, dass die unabhängige (d.h. außerhalb der Kontrolle eines Betreibers des Kommunikationsnetzes liegende) Zahlungsanforderungseinrichtung durch Senden der Zahlungsanforderung an das Zahlungssystem eine Abrechnung der kostenpflichtigen Leistungen herbeiführen kann, ohne dass die unabhängige Zahlungsanforderungseinrichtung einen direkten Zugriff auf das Guthabenkonto zu haben braucht. Die unabhängige Zahlungsanforderungseinrichtung muss nicht einmal Informationen über die interne Organisation der Guthabenkonten in dem Kommunikationsnetz besitzen.
Insbesondere ist weiterhin vorteilhaft, dass die Zahlungsanforderungseinrichtung lediglich die Kennung des betreffenden Kommunikationsendgerätes (also z. B. die MSISDN dieses Gerätes) kennen muss. Die Zahlungsanforderungseinrichtung braucht jedoch keine Informationen darüber zu besitzen, was für ein Konto dem jeweiligen Kommunikationsendgerät zugeordnet ist und von welcher Kontoführungseinrichtung dieses Konto geführt wird, da diese Informationen von der Adressbestimmungseinrichtung geliefert werden.

Das erfindungsgemäße Verfahren kann derart ausgestaltet sein, dass in der Zahlungsanforderung Daten enthalten sind, aus denen die Identität der Zahlungsanforderungseinrichtung ermittelt wird. Hierbei ist insbesondere vorteilhaft, dass durch die Kenntnis der Identität der Zahlungsanforderungseinrichtung z. B. sämtliche im Zusammenhang mit der beteiligten Zahlungsanforderungseinrichtung auftretenden Transaktionen protokolliert werden können.

Das Verfahren kann derart ausgestaltet sein, dass unter Nutzung der ermittelten Identität die Berechtigung der Zahlungsanforderungseinrichtung zur Teilnahme an dem Verfahren überprüft wird. Dadurch kann sichergestellt werden, dass nur solche Zahlungsanforderungseinrichtungen an dem Verfahren teilnehmen, welche eine entsprechende Berechtigung besitzen. Beispielsweise ist es denkbar, dass derartige Berechtigungen nur an solche Zahlungsforderungseinrichtungen unabhängiger Leistungsanbieter vergeben werden, die vom Betreiber des Kommunikationsnetzes überprüft und als zuverlässig eingestuft wurden.

Das erfindungsgemäße Verfahren ist derart ausgestaltet, dass die Adressierungsdaten aus einem Datenspeicherknoten des Kommunikationsnetzes abgefragt werden. Hierbei ist insbesondere vorteilhaft, dass in bekannten Kommunikationsnetzen (z. B. GSM-Netzen) oftmals Datenspeicherknoten vorhanden sind (z. B. in Form von HLR-Knoten, HLR = home location register). In derartigen Datenspeicherknoten können erfindungsgemäß auch die Adressierungsdaten abgelegt werden, so dass zur Realisierung des Verfahrens keine zusätzlichen Datenspeicherknoten notwendig sind.

Das erfindungsgemäße Verfahren kann derart ausgestaltet sein, dass mit der Verrechnungsnachricht die Kennung und/oder der Zahlbetrag an die Kontoführungseinrichtung gesendet werden. Hierbei ist vorteilhaft, dass mit nur einer Nachricht all diejenigen Daten an die Kontoführungseinrichtung übertragen werden, welche im weiteren Verfahrensablauf von der Kontoführungseinrichtung benötigt werden.

Das erfindungsgemäße Verfahren kann auch derart ausgestaltet sein, dass von dem Zahlungssystem mindestens ein der Zahlungsanforderungseinrichtung zugeordnetes Zwischenkonto geführt wird, und nach Abbuchung des Zahlbetrages von dem Guthaben-Konto dieser Zahlbetrag auf das Zwischenkonto aufgebucht wird. Hierbei ist insbesondere vorteilhaft, dass nach Abbuchung des Zahlbetrages von dem Guthabenkonto dieser Zahlbetrag zunächst einmal auf das Zwischenkonto des Zahlungssystems aufgebucht wird und somit schon im Zahlungssystem eine Weiterverarbeitung der Zahlbeträge erfolgen kann.

Das erfindungsgemäße Verfahren kann so ausgestaltet sein, dass auf dem Zwischenkonto die aufgebuchten Zahlbeträge mehrerer aufeinanderfolgender Zahlungsanforderungen summiert werden, und die jeweils berechnete Zahlbetragsumme in Verrechnungszeitabständen auf ein der Zahlungsanforderungseinrichtung zugeordnetes Geldkonto übertragen wird, wobei die Verrechnungszeitabstände größer sind als der durchschnittliche Zeitabstand zwischen jeweils zwei aufeinanderfolgenden Zahlungsanforderungen. Bei dieser Übertragung der Zahlbetragsumme kann es sich z.B. um eine Überweisung, um eine Lastschrift oder um ein anderes bekanntes Geld-Transaktionsverfahren handeln. Hierbei ist besonders vorteilhaft, dass aufgrund der Summation der Zahlbeträge und der relativ großen Verrechnungszeitabstände nur relativ wenige Übertragungen der summierten Zahlungsbeträge auf das Geldkonto der Zahlungsanforderungseinrichtung notwendig sind. Aufgrund der Summation werden Zahlbetragsummen übertragen, welche größer sind als die einzelnen Zahlbeträge. Da jede Übertragung auf ein Geldkonto zum einen aufwendig und zum zweiten oft mit zusätzlichen Übertragungsgebühren (z.B. Überweisungsgebühren) verbunden ist, kann auf diese Art und Weise ein einfaches und kostengünstiges Abrechnungsverfahren realisiert werden.

Das erfindungsgemäße Verfahren kann derart ausgestaltet sein, dass von der Zahlungsanforderungseinrichtung die Erbringung der kostenpflichtigen Leistungen überwacht wird, und von der Zahlungsanforderungseinrichtung bei einer erfolglosen Leistungserbringung das Senden der Zahlungsanforderung an das Zahlungssystem unterbunden wird. Hierbei ist vorteilhaft, dass z. B. bei Auftreten eines Fehlers, welcher zur Folge hat, dass die Leistung nicht korrekt erbracht wird, keine Zahlungsanforderung an das Zahlungssystem gesendet wird und somit auch kein Zahlbetrag von dem Guthabenkonto abgebucht wird.

Das erfindungsgemäße Verfahren kann auch derart ausgestaltet sein, dass nacheinander mehrere jeweils einen Teil-Zahlbetrag enthaltende Teil-Zahlungsanforderungen an das Zahlungssystem gesendet werden, wobei die Höhe der Teil-Zahlbeträge jeweils einer erbrachten Teilleistung entspricht. Diese Ausgestaltung des Verfahren ist insbesondere dann vorteilhaft, wenn eine umfangreiche zu erbringende Leistung in mehrere Teilleistungen aufgeteilt werden kann. Dann kann nach jeder Erbringung einer Teilleistung eine entsprechende Teilzahlungsanforderung an das Zahlungssystem gesandt werden, wodurch sowohl für den Leistungsanbieter wie auch für den Leistungsempfänger eine zeitnah der Teil-Leistungserbringung zugeordnete Abrechnung der Teil-Zahlbeträge möglich ist.

Zur weiteren Erläuterung der Erfindung ist in
Figur 1 ein Ausführungsbeispiel einer OSA-Anwendung und eines Ausschnittes aus einem Kommunikationsnetz zur Anwendung des Abrechnungsverfahrens und in
Figur 2 ein Ausführungsbeispiel einer IP-Anwendung und eines Ausschnittes aus einem Kommunikationsnetz zur Anwendung des Abrechnungsverfahrens dargestellt.

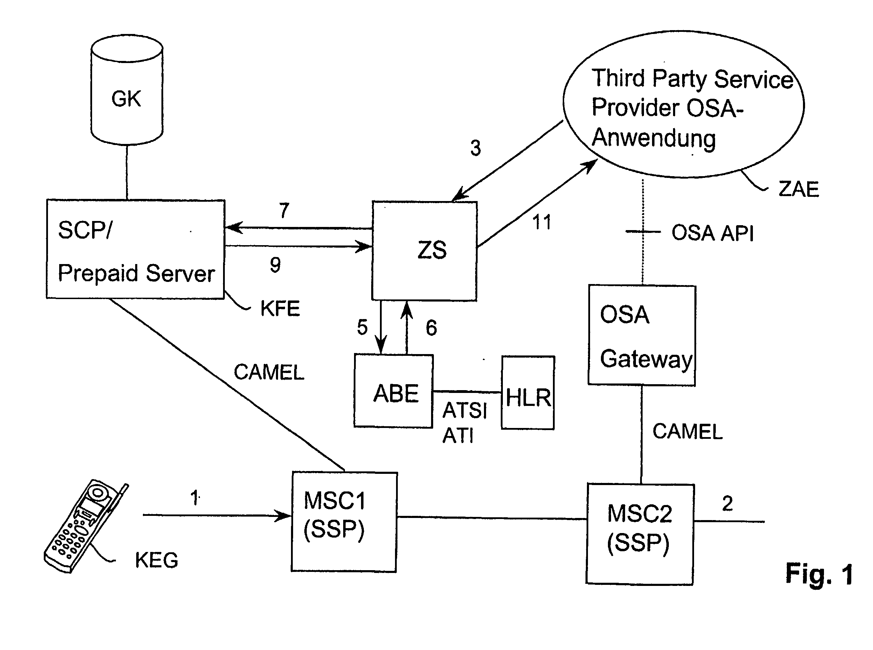

In Figur 1 sind schematisch Ausführungsbeispiele von Verfahrensschritten dargestellt, mit denen vorzugsweise kostenpflichtige Leistungen in Form von Sprachdiensten abgerechnet werden können. Unter Sprachdiensten sollen hier solche Dienste verstanden werden, bei denen dem Dienstnutzer Informationen auf akustischem Wege (also z. B. mittels natürlicher oder synthetisch erzeugter Sprache) übermittelt werden. Ein Kommunikationsendgerät KEG (z. B. ein Handy oder ein Festnetztelefon) ist über eine Netzanbindung 1 mit einem Kommunikationsnetz verbunden. Bei diesem Netz kann es sich z. B. um ein Kommunikationsnetz nach dem weitverbreiteten GSM-Standard handeln (GSM = Global System for Mobile Communication). Zu dem Kommunikationsnetz gehört eine erste Vermittlungsstelle MSC1 und eine zweite Vermittlungsstelle MSC2 (MSC = mobile switching center). Die erste Vermittlungsstelle MSC1 ist mit einer Kontoführungseinrichtung KFE verbunden. Bei einer derartigen Kontoführungseinrichtung kann es sich beispielsweise um einen Dienstesteuerpunkt SCP (SCP = service control point) handeln, wenn das Kommikationsnetz eine Struktur eines intelligenten Netzes (IN = intelligent network) aufweist. In diesem intelligenten Netz hat die erste Vermittlungsstelle MSC1 und die zweite Vermittlungsstelle MSC2 die Funktion eines Dienstevermittlungspunktes SSP (SSP = Service Switching Point).

Eine solche Kontoführungseinrichtung wird häufig auch als Prepaid Server bezeichnet, wenn von dieser Einrichtung vorausgezahlte Guthabenkonten geführt werden. Die Nachrichtenverbindung zwischen der ersten Vermittlungsstelle MSC1 und der Kontoführungseinrichtung KFE wird unter Nutzung des sog. CAMEL Standards realisiert (CAMEL = Customised Applications for Mobile Network Enhanced Logic). Die Kontoführungseinrichtung KFE ist mit einem Zahlungssystem ZS verbunden, welches seinerseits eine Verbindung zu einer Adressbestimmungseinrichtung ABE aufweist. Das Zahlungssystem ZS und die Adressbestimmungseinrichtung ABE können Bestandteile des Kommunikationsnetzes sein; sie können aber auch durch eigenständige Einheiten gebildet werden, welche extern an das Kommunikationsnetz angeschlossen werden.

An die zweite Vermittlungsstelle MSC2 des Kommunikationsnetzes ist ein OSA-Gateway angeschlossen. Dieses OSA-Gateway stellt über eine Schnittstelle OSA API (OSA application programming interface) eine Verbindung zu einer Zahlungsanforderungseinrichtung ZAE her. Eine derartige Zahlungsanforderungseinrichtung ZAE kann durch eine OSA Anwendung (OSA Applikation) realisiert werden, welche in der Lage ist, über die Schnittstelle OSA API mit dem OSA-Gateway zu kommunizieren. In diesem Ausführungsbeispiel wird eine "Third Party Service Provider OSA-Anwendung" verwendet, die dem unabhängigen Anbieter ("Third Party Service Provider") zugeordnet ist. Die Zahlungsanforderungseinrichtung ZAE gehört nicht dem Kommunikationsnetz an; vielmehr wird die Zahlungsanforderungseinrichtung unabhängig von dem Kommunikationsnetz betrieben und unterliegt auch nicht der Kontrolle eines Betreibers des Kommunikationsnetzes.

Dem im folgenden beschriebenen Verfahrensablauf liegt die Situation zugrunde, dass für das Kommunikationsendgerät KEG beispielsweise ein Sprachdienst erbracht werden soll. Ein solcher Sprachdienst kann z. B. darin bestehen, dass dem Kommunikationsgerät KEG aktuelle Informationen wie z. B. Börsenkurse oder die neuesten Nachrichten automatisch angesagt werden. Zu diesem Zweck kann beispielsweise ein Sprachansagegerät an einen Anschluss 2 der zweiten Vermittlungsstelle MSC2 angeschlossen werden; die Sprachinformationen werden dann über eine Kommunikationsverbindung zu dem Kommunikationsendgerät KEG übertragen, wobei die Kommunikationsverbindung über die beiden Vermittlungsstellen MSC1 und MSC2 hergestellt wird. Da es sich bei diesem Sprachdienst um eine kostenpflichtige Leistung handelt, soll die Zahlungsanforderungseinrichtung ZAE eine Abrechnung dieser kostenpflichtigen Leistung zu Lasten des Kommunikationsendgerätes KEG durchführen.

Die Erbringung des Sprachdienstes kann entweder von der Zahlungsanforderungseinrichtung ZAE veranlasst sein oder sie kann auch von einer weiteren (in der Figur nicht dargestellten) Einrichtung veranlasst sein. Im letzteren Fall wird die Zahlungsanforderungseinrichtung ZAE von der weiteren Einrichtung lediglich mit der Abrechnung der kostenpflichtigen Leistung beauftragt.

Dem Kommunikationsendgerät KEG ist innerhalb des Kommunikationsnetzes ein Guthabenkonto GK (ein Prepaid-Konto) zugeordnet, welches von der Kontoführungseinrichtung KFE geführt wird. Über dieses Guthabenkonto GK werden die das Kommunikationsendgerät KEG betreffenden Kosten abgerechnet. Das Guthabenkonto GK kann z. B. in einer mit der Kontoführungseinrichtung KFE verbundenen Datenbank oder aber auch in der Kontoführungseinrichtung selbst geführt werden.
Der Zahlungsanforderungseinrichtung ZAE ist jedoch der direkte Zugriff auf das Guthabenkonto GK verwährt, da das Guthabenkonto GK intern in dem Kommunikationsnetz geführt wird, die Zahlungsanforderungseinrichtung ZAE jedoch unabhängig vom Kommunikationsnetz betrieben wird, und nicht einer Kontrolle eines Kommunikationsnetzbetreibers unterliegt.

Als Voraussetzung zur Teilnahme an dem Abrechnungsverfahren wurde schon im Vorfeld des Verfahrens die Zahlungsanforderungseinrichtung ZAE beim Betreiber des Kommunikationsnetzes bekannt gemacht (registriert). Dazu wurden in dem Kommunikationsnetz oder in dem Zahlungssystem ZAE Informationen zur Feststellung der Identität der Zahlungsanforderungseinrichtung gespeichert. Bei derartigen Informationen kann es sich z. B. um sog. Signaturen handeln, mit denen die von der Zahlungsanforderungseinrichtung ZAE an das Zahlungssystem ZS gesandten Nachrichten signiert werden. Weiterhin kann beispielsweise der Name, die Anschrift und die Bankverbindung des Betreibers der Zahlungsanforderungseinrichtung gespeichert sein. Ebenso kann gespeichert sein, dass die Zahlungsanforderungseinrichtung berechtigt ist, Zahlungsanforderungen für solche Kunden an das Zahlungssystem zu versenden, für die ein Guthabenkonto GK in dem Kommunikationsnetz geführt wird.

Zum Beginn des Leistungsabrechnungsverfahrens schickt die Zahlungsanforderungseinrichtung ZAE eine Zahlungsanforderung 3 an das Zahlungssystem ZS. Eine derartige Zahlungsanforderung enthält eine Kennung des Kommunikationsendgerätes KEG. Als derartige Kennung kann z. B. die MSISDN des Kommunikationsendgerätes KEG, also eine E.164-Nummer verwendet werden. Des weiteren enthält die Zahlungsanforderung 3 den Zahlbetrag für die abzurechnende Leistung. Ebenso kann die Zahlungsanforderung 3 eine Bezeichnung der kostenpflichtigen Leistung enthalten (Product Id). Die Zahlungsanforderung 3 kann auch Daten enthalten, aus denen die Zahlungsanforderungseinrichtung ZAE erkennbar ist (service provider Id). Die Zahlungsanforderungseinrichtung wird nämlich auch als Third Party Service Provider bezeichnet, wenn sie neben der Leistungsabrechnung auch für die Erbringung der Leistungen zuständig ist.

Das Zahlungssystem ZS stellt nun anhand der Zahlungsanforderung 3 die Identität der Zahlungsanforderungseinrichtung ZAE (des Third Party Service Providers) fest. Dazu kann zum einen die in der Zahlungsanforderung übertragene "service provider Id" dienen oder es kann eine Signatur der Zahlungsanforderungseinrichtung ausgewertet werden, mit der die Zahlungsanforderung signiert war (das Signieren von Nachrichten ist allgemein bekannt unter dem Stichwort "Public Key Infrastructure").

Dem Zahlungssystem ZS ist nun das Kommunikationsendgerät KEG bekannt, da dessen Kennung in der Zahlungsanforderung übertragen wurde. Das Zahlungssystem ZS muss nun feststellen, von welcher Kontoführungseinrichtung des Kommunikationsnetzes das Gebührenkonto des Kommunikationsendgerätes KEG geführt wird. In einem Kommunikationsnetz können nämlich mehrere Kontoführungseinrichtungen vorhanden sein, die jeweils ausgewählte Guthabenkonten führen. Daher sendet das Zahlungssystem ZS eine Abfragenachricht 5 an die Adressbestimmungseinrichtung ABE. Diese Abfragenachricht 5 enthält die Kennung des Kommunikationsendgerätes KEG. Die Adressbestimmungseinrichtung ABE ermittelt anhand der Kennung, welche Kontoführungseinrichtung das Konto des Kommunikationsendgerätes KEG führt und sendet Adressierungsdaten dieser Kontoführungseinrichtung mit einer Antwortnachricht 6 an das Zahlungssystem ZS zurück. Die Zuordnung der Kennung zu den Adressierungsdaten der Kontoführungseinrichtung kann sowohl in der Adressbestimmungseinrichtung ABE selbst (beispielsweise in einem Datenspeicher) abgelegt sein oder die Adressbestimmungseinrichtung ABE kann auf einen Datenspeicherknoten des Kommunikationsnetzes zugreifen, in dem diese Zuordnung abgelegt ist. Bei einem solchen Datenspeicherknoten kann es sich beispielsweise um das in vielen Kommunikationsnetzen vorhandene Heimatregister HLR (home location register) handeln, in dem Daten des Kommunikationsendgerätes KEG gespeichert sind.

Vorteilhafterweise kann neben den ursprünglich im HLR gespeicherten Daten im Rahmen dieses Verfahrens auch die benötigte Zuordnung der Kennung (z. B. MSISDN) des Kommunikationsendgerätes KEG zu der Kontoführungseinrichtung in dem Heimatregister HLR gespeichert werden. Somit kannn die bereits in dem Kommunikationsnetz vorhandene HLR-Hardware für eine neue Verwendung genutzt werden.

Eine solche Abfrage von HLR-Daten kann beispielsweise mit Hilfe der bekannten CAMEL-Operation ATSI (any time subscription interrogation) oder mit der CAMEL-Operation ATI (any time interrogation) durchgeführt werden.

Das Heimatregister HLR oder auch die Adressbestimmungseinheit ABE übersetzt also die E.164-Adresse des Kommunikationsendgerätes in die SS7-Adresse (SS7 = Signalisierungssystem Nr. 7) des kontenführenden SCPs (d. h. der Kontoführungseinrichtung). Zusätzlich kann dem Zahlungssystem ZS von der Adressbestimmungseinrichtung ABE Auskunft darüber erteilt werden, ob dem Kommunikationsendgerät KEG überhaupt ein Prepaid-Konto zugeordnet ist oder ob dem Kommunikationsendgerät KEG ein Postpaid-Konto zugeordnet ist.

Nachdem das Zahlungssystem ZS die Adressierungsdaten von der Adressbestimmungseinrichtung ABE erhalten hat, sendet es eine Verrechnungsnachricht 7 an die durch die Adressierungsdaten gekennzeichnete Kontoführungseinrichtung KFE, d. h. an die Kontoführungseinrichtung, die das Konto des Kommunikationsendgerätes KEG verwaltet. Diese Verrechnungsnachricht 7 kann beispielsweise den Zahlbetrag und die Kennung des Kommunikationsendgerätes KEG enthalten. Nach Empfang der Verrechnungsnachricht 7 wählt die Kontoführungseinrichtung KFE aufgrund der Kennung des Kommunikationsendgerätes KEG das dem Kommunikationsendgerät zugeordnete Guthabenkonto GK aus, bucht den Zahlbetrag von dem Guthabenkonto GK ab und sendet eine Verrechnungsbestätigungsnachricht 9 an das Zahlungssystem ZS zurück.

Das Zahlungssystem ZS führt ein der Zahlungsanforderungseinrichtung ZAE zugeordnetes Zwischenkonto. Dies ist ein Konto, auf dem zeitweise die von dem Guthabenkonto abgebuchten Zahlbeträge zwischengebucht werden. Auf dem Zwischenkonto wird also ein dem Zahlbetrag entsprechender Betrag aufgebucht und im Anschluss daran eine Bestätigungsnachricht 11 von dem Zahlungssystem ZS an die Zahlungsanforderungseinrichtung ZAE gesendet. Mit dieser Bestätigungsnachricht 11 wird der Zahlungsanforderungseinrichtung mitgeteilt, dass der Zahlbetrag erfolgreich abgerechnet wurde.

Der auf dem Zwischenkonto des Zahlungsystems zwischengebuchte Betrag kann zu einem späteren Zeitpunkt beispielsweise mit den zwischengebuchten Beträgen weiterer Zahlungsanforderungen zusammengefasst (aufsummiert) werden und in bestimmten Berechnungszeitabständen (beispielsweise jeweils am Ende eines Tages) kann ein der Zahlbetragssumme entsprechender Geldbetrag auf ein konventionelles Geldkonto der Zahlungsanforderungseinrichtung (z. B. bei einer Bank) aufgebucht werden. Nach dieser Geldaufbuchung wird die Zahlbetragssumme auf dem Zwischenkonto gelöscht. Das Zahlungssystem protokolliert sämtliche ablaufenden Transaktionen und speichert die Daten zur späteren Kontrolle.

Ein wesentlicher Vorteil des bisher beschriebenen Verfahrens besteht darin, dass die Abrechnung der kostenpflichtigen Leistungen in Echtzeit erfolgen kann, d. h. dass nach dem Senden der Zahlungsanforderung 3 von der Zahlungsanforderungseinrichtung ZAE zum Zahlungssystem ZS unmittelbar die weiteren Verfahrensschritte ablaufen und schon kurze Zeit später die Bestätigungsnachricht 11 an die Zahlungsanforderungseinrichtung ZAE zurückgesandt wird. Dadurch kann das beschriebene Verfahren z. B. vor dem Aufbau einer Kommunikationsverbindung zu dem Kommunikationsendgerät KEG (die der Erbringung der kostenpflichtigen Leistung dient) ablaufen, ohne dass ein Benutzer des Kommunikationsendgerätes KEG eine nennenswerte Verzögerung durch das Abrechnungsverfahren in Kauf nehmen muss. Ebenso kann das Abrechnungsverfahren jedoch auch während der Kommunikationsverbindung oder zum Ende der Kommunikationsverbindung durchgeführt werden.

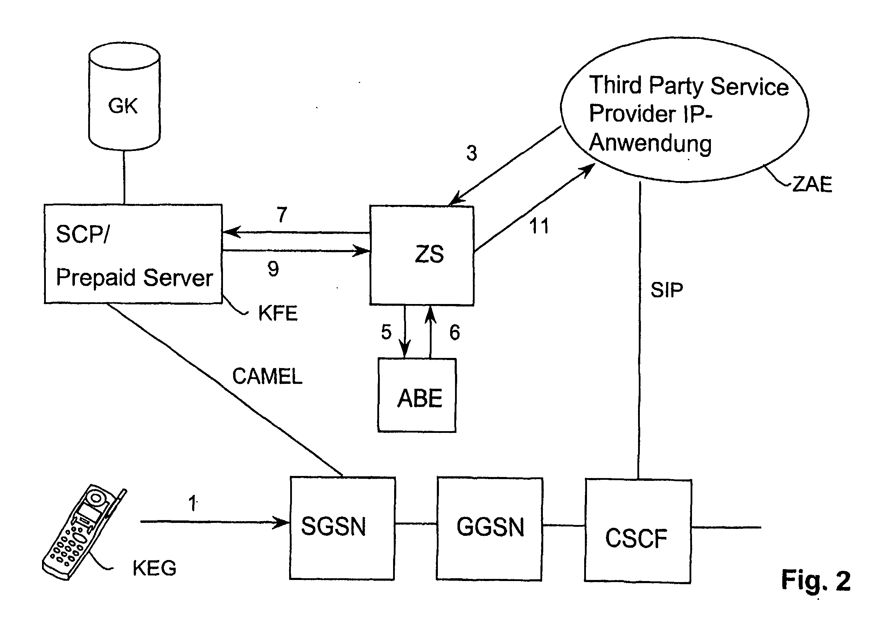

In Figur 2 ist ein weiteres Anwendungsbeispiel für das beschriebene Verfahren zum Abrechnen kostenpflichtiger Leistungen dargestellt. Figur 2 zeigt einen Ausschnitt aus einen UMTS-Kommunikationsnetz, an das eine Zahlungsanforderungseinrichtung ZAE in Form einer IP-Anwendung (IP- Applikation; IP = internet protocol) angeschlossen ist.

Im Unterschied zur Figur 1, bei der als für das Beispiel wesentliche Teile des Kommunikationsnetzes die erste Vermittlungsstelle MSC1, die zweite Vermittlungsstelle MSC2 sowie die Kontoführungseinrichtung KFE dargestellt ist, sind in der Figur 2 als wesentliche Bestandteile des UMTS-Kommunikationsnetzes eine Vermittlungsstelle SGSN (serving GPRS support node; GPRS = General Packet Radio Service), ein Knoten GGSN (GGSN = gateway GPRS support node) und die Kontoführungseinrichtung KFE dargestellt. UMTS-Netze sind besonders zur Übertragung von Daten und zur Erbringung von Datendiensten geeignet.

Die IP-Anwendung arbeitet nicht nur als Zahlungsanforderungseinrichtung ZAE analog zu der in der Figur 1 dargestellten Art und Weise, sondern sie erbringt auch direkt die kostenpflichtige Leistung (hier z. B. einen IP-Datendienst wie "Voice over IP" (VoIP)). Zu diesem Zweck ist die IP-Anwendung über einen "call state control function" CSCF benannten Knoten mit dem UMTS-Kommunikationsnetz verbunden; die Kommunikation zwischen der IP-Anwendung und dem Knoten CSCF erfolgt mittels eines als Session Initiation Protocol (SIP) bezeichneten Kommunikationsprotokolls.

Die "Third Party Service Provider IP-Anwendung" erbringt also direkt die kostenpflichtige Leistung für das Kommunikationsendgerät KEG; beispielsweise können VoIP-Daten von der IP-Anwendung über die Elemente CSCF, GGSN und SGSN an das Kommunikationsendgerät KEG übertragen werden. Um die Kosten für diese kostenpflichtige Leistung abzurechnen, sendet die IP-Applikation in bekannter Weise eine Zahlungsanforderung 3 an das Zahlungssystem ZS. Der weitere Ablauf entspricht dem in der Figur 1 dargestellten Ablauf.

Es soll ausdrücklich darauf hingewiesen werden, dass das Zahlungssystem ZS und die Adressbestimmungseinrichtung ABE, wie in den Figuren dargestellt, als zwei getrennte Einheiten realisiert sein können, zwischen denen ein Datenaustausch stattfindet. Es ist aber natürlich auch möglich, dass das Zahlungssystem ZS und die Adressbestimmungseinrichtung ABE gemeinsam in einem Netzelement realisiert sind. Ebenso können die erste Vermittlungsstelle MSC1 und die zweite Vermittlungsstelle MSC2 auch als eine einzige Vermittlungsstelle realisiert sein. Die Zahlungsanforderungseinrichtung ZAE kann entweder lediglich dazu dienen, eine Zahlung unter Benutzung des Guthabenkontos anzufordern oder sie kann außerdem noch andere Aktionen durchführen, beispielsweise kann sie zusätzlich die der Zahlung zugrundeliegende Leistung erbringen (z.B. einen Dienst erbringen).

Mit dem beschriebenen Verfahren können kostenpflichtige Leistungen in Kommunikationsnetzen in Echtzeit auf Prepaid-Konten abgerechnet werden. Dies ist auch dann möglich, wenn ein vom Kommunikationsnetz unabhängiger Dienste-Anbieter (Third party service provider) diese kostenpflichtigen Leistungen erbringt oder abrechnet. Durch Anwendung des Zahlungssystems ZS mit der Adressbestimmungseinrichtung ABE und den entsprechenden Schnittstellen kann die Zahlungsanforderungseinrichtung ZAE des unabhängigen Dienste-Anbieters kostenpflichtige Leistungen abrechnen, ohne selbst direkt auf das Guthabenkonto zuzugreifen oder Informationen über interne Implementationen des Guthabenkontos oder der Zugriffsmechanismen auf das Guthabenkonto zu besitzen. Dadurch werden die Sicherheitsinteressen des Kommunikationsnetzbetreibers berücksichtigt, da dieser keine Angaben über seine internen Kontenführungs- und Buchungsverfahren an die Zahlungsanforderungseinrichtung ZAE übermitteln braucht.

## Patentansprüche

1. Verfahren zum Abrechnen von kostenpflichtigen Leistungen mittels eines Guthaben-Kontos (GK), das in einem Kommunikationsnetz durch eine Kontoführungseinrichtung (KFE) für mindestens ein in dem Kommunikationsnetz registriertes Kommunikationsendgerät (KEG) geführt wird, bei dem
- von einer außerhalb der Kontrolle eines Betreibers des Kommunikationsnetzes liegenden Zahlungsanforderungseinrichtung (ZAE) eine Zahlungsanforderung (3) an ein dem Kommunikationsnetz zugeordnetes Zahlungssystem (ZS) gesendet wird, wobei die Zahlungsanforderung (3) eine Kennung des Kommunikationsendgerätes (KEG) und einen Zahlbetrag enthält,
**dadurch gekennzeichnet, dass**
- von dem Zahlungssystem (ZS) unter Nutzung der Kennung Adressierungsdaten der Kontoführungseinrichtung (KFE) des Guthaben-Kontos (GK) ermittelt werden, indem von dem Zahlungssystem (ZS) eine Adressbestimmungseinrichtung (ABE) mit der Ermittlung der Adressierungsdaten der Kontoführungseinrichtung (KFE) des Guthaben-Kontos (GK) beauftragt wird und von der Adressbestimmungseinrichtung (ABE) die Adressierungsdaten aus einem Datenspeicherknoten (HLR) des Kommunikationsnetzes abgefragt werden, und
- von dem Zahlungssystem (ZS) eine Verrechnungsnachricht (7) an die durch die Adressierungsdaten **gekennzeichnet**e Kontoführungseinrichtung (KFE) einer Mehrzahl von Kontoführungseinrichtungen des Kommunikationsnetzes gesendet wird, um den Zahlbetrag von dem Guthaben-Konto (GK) abzubuchen.

2. Verfahren nach Anspruch 1,
**dadurch gekennzeichnet, dass**
- in der Zahlungsanforderung (3) Daten enthalten sind, aus denen die Identität der Zahlungsanforderungseinrichtung (ZAE) ermittelt wird.

3. Verfahren nach Anspruch 2,
**dadurch gekennzeichnet, dass**
- unter Nutzung der ermittelten Identität die Berechtigung der Zahlungsanforderungseinrichtung (ZAE) zur Teilnahme an dem Verfahren überprüft wird.

4. Verfahren nach einem der vorhergehenden Ansprüche,
**dadurch gekennzeichnet, dass**
- mit der Verrechnungsnachricht (7) die Kennung und/oder der Zahlbetrag an die Kontoführungseinrichtung (KFE) gesendet werden.

5. Verfahren nach einem der vorhergehenden Ansprüche,
**dadurch gekennzeichnet, dass**
- von dem Zahlungssystem (ZS) mindestens ein der Zahlungsanforderungseinrichtung (ZAE) zugeordnetes Zwischenkonto geführt wird, und
- nach Abbuchung des Zahlbetrages von dem Guthaben-Konto (GK) dieser Zahlbetrag auf das Zwischenkonto aufgebucht wird.

6. Verfahren nach Anspruch 5,
**dadurch gekennzeichnet, dass**
- auf dem Zwischenkonto die aufgebuchten Zahlbeträge mehrerer aufeinanderfolgender Zahlungsanforderungen (3) summiert werden, und
- die jeweils berechnete Zahlbetragsumme in Verrechnungszeitabständen auf ein der Zahlungsanforderungseinrichtung (ZAE) zugeordnetes Geldkonto übertragen wird, wobei die Verrechnungszeitabstände größer sind als der durchschnittliche Zeitabstand zwischen jeweils zwei aufeinanderfolgenden Zahlungsanforderungen (3).

7. Verfahren nach einem der vorhergehenden Ansprüche,
**dadurch gekennzeichnet, dass**
- von der Zahlungsanforderungseinrichtung (ZAE) die Erbringung der kostenpflichtigen Leistungen überwacht wird, und
- von der Zahlungsanforderungseinrichtung (ZAE) bei einer erfolglosen Leistungserbringung das Senden der Zahlungsanforderung (3) an das Zahlungssystem (ZS) unterbunden wird.

8. Verfahren nach einem der vorhergehenden Ansprüche,
**dadurch gekennzeichnet, dass**
- nacheinander mehrere jeweils einen Teil-Zahlbetrag enthaltende Teil-Zahlungsanforderungen an das Zahlungssystem (ZS) gesendet werden, wobei die Höhe der Teil-Zahlbeträge jeweils einer erbrachten Teilleistung entspricht.

## Claims

1. Method for billing for chargeable services by means of a prepaid account (GK) which is kept by an account-keeping device (KFE) in a communication network for at least one communication terminal (KEG) registered in the communication network, in which
- a payment request device (ZAE) which is not under the control of an operator of the communication network sends a payment request (3) to a payment system (ZS) associated with the communication network, the payment request (3) containing an identification of the communication terminal (KEG) and a payable amount,
**characterized in that**
- the payment system (ZS) determines addressing data of the account-keeping device (KFE) of the prepaid account (GK) by using the identification, by virtue of the payment system (ZS) ordering an address-finding device (ABE) to determine the addressing data of the account-keeping device (KFE) of the prepaid account (GK) and the addressing data being interrogated from a data storage node (HLR) of the communication network by the address-finding device (ABE), and
- the payment system (ZS) sends a billing message (7) to the account-keeping device (KFE) among a plurality of account-keeping devices in the communication network that is identified by the addressing data, in order to deduct the payable amount from the prepaid account (GK).

2. Method according to Claim 1, **characterized in that**
- the payment request (3) contains data from which the identity of the payment request device (ZAE) is determined.

3. Method according to Claim 2, **characterized in that**
- the authorization of the payment request device (ZAE) for participation in the method is checked by using the identity determined.

4. Method according to one of the preceding claims,
**characterized in that**
- together with the billing message (7), the identification and/or the payable amount are sent to the account-keeping device (KFE).

5. Method according to one of the preceding claims,
**characterized in that**
- the payment system (ZS) keeps at least one suspense account associated with the payment request device (ZAE), and
- after the payable amount has been deducted from the prepaid account (GK), this payable amount is credited to the suspense account.

6. Method according to Claim 5, **characterized in that**
- the credited payable amounts of a number of successive payment requests (3) are added together in the suspense account, and
- the sum of payable amounts calculated in each case is transferred at billing time intervals to a money account associated with the payment request device (ZAE), the billing time intervals being greater than the average time interval between in each case two successive payment requests (3).

7. Method according to one of the preceding claims,
**characterized in that**
- the payment request device (ZAE) monitors the rendering of the chargeable services and
- the payment request device (ZAE) prevents the payment request (3) from being sent to the payment system (ZS) if the rendering of a service is unsuccessful.

8. Method according to one of the preceding claims,
**characterized in that**
- successively a number of part-payment requests, in each case containing a part payable amount, are sent to the payment system (ZS), the magnitude of the part payable amounts in each case corresponding to a part-service rendered.

## Revendications

1. Procédé pour décompter des services soumis à rétribution à l'aide d'un compte courant (GK) qui est tenu dans un réseau de communication par une installation de tenue de compte (KFE) pour au moins un terminal de communication (KEG) enregistré dans un réseau de communication,
selon lequel
- une demande de paiement (3) est envoyée à un système de paiement (ZS) associé au réseau de communication à partir d'une installation chargée de demander le paiement (ZAE) située hors du contrôle d'un exploitant du réseau de communication, la demande de paiement (3) comportant un indicatif du terminal de communication (KEG) et une somme à payer,
**caractérisé en ce que**
- en utilisant l'indicatif, le système de paiement (ZS) établit les données d'adressage de l'installation de tenue de compte (KFE) qui tient le compte courant (GK) **en ce que** le système de paiement (ZS) charge une installation chargée de déterminer l'adresse (ABE) d'établir les données d'adressage concernant l'installation de tenue de compte (KFE) qui tient le compte courant (GK) et l'installation chargée de déterminer l'adresse (ABE) demande les données d'adressage à un noeud de mémoire d'informations (HLR) du réseau de communication et,
- parmi de nombreuses installations de tenue de compte dans le réseau de communication, le système de paiement (ZS) envoie un message d'imputation (7) à l'installation de tenue de compte (KFE) **caractérisée par** les données d'adressage afin de débiter la somme à payer sur le compte courant (GK).

2. Procédé selon la revendication 1, **caractérisé en ce que**
- dans la demande de paiement (3) il y a des données à partir desquelles est établie l'identité de l'installation chargée de demander le paiement (ZAE).

3. Procédé selon la revendication 2, **caractérisé en ce que**,
- en utilisant l'identité établie, on vérifie que l'installation chargée de demander le paiement (ZAE) est autorisée à prendre part au procédé.

4. Procédé selon l'une des revendications précédentes, **caractérisé en ce que**
- l'indicatif et/ou la somme à payer peut être envoyé(e) à l'installation de tenue de compte (KFE) en même temps que le message d'imputation (7).

5. Procédé selon l'une des revendications précédentes, **caractérisé en ce que**
- le système de paiement (ZS) tient au moins un compte intermédiaire associé à l'installation chargée de demander le paiement (ZAE) et,
- après que la somme à payer a été débitée du compte courant (GK), cette somme à payer est créditée sur le compte intermédiaire.

6. Procédé selon la revendication 5, **caractérisé en ce que**
- les sommes à payer créditées provenant de plusieurs demandes de paiement (3) successives sont additionnés sur le compte intermédiaire et
- chaque total calculé des sommes à payer est transmis à un compte associé à une installation chargée de demander le paiement (ZAE) à des intervalles d'imputation, les intervalles d'imputation étant supérieurs à l'intervalle moyen entre deux demandes de paiement (3) successives.

7. Procédé selon l'une des revendications précédentes, **caractérisé en ce que**
- l'installation chargée de demander le paiement (ZAE) surveille que les services soumis à rétribution sont rendus et
- l'installation chargée de demander le paiement (ZAE) empêche que la demande de paiement (3) ne soit envoyée au système de paiement (ZS) lorsque le service n'a pas été rendu.

8. Procédé selon l'une des revendications précédentes, **caractérisé en ce que**
- plusieurs demandes de paiement partiel qui contiennent chacune une somme à payer partielle sont envoyées successivement au système de paiement, chacun des montants des sommes partielles à payer correspondant à un service partiel rendu.
